# EUROPEAN PATENT APPLICATION

(11) **EP 4 617 121 A1**
(43) Date of publication of application: **17.09.2025**
(21) Application number: 25160483.1
(22) Date of filing: 27.02.2025
(51) Int. Cl.: B60R 1/23, B60R 1/25, B60R 11/04

(54) **A SAFETY VIDEO SYSEM FOR TRUCKS FOR SHOOTING POSSIBLE BLIND SPOTS**

(30) Priority: 12.03.2024 IT 202400005548
(71) Applicant: Chiros Srls, 06012 Città di Castello (IT)
(72) Inventor: PASQUIN, Fabrizio, 06012 Città di Castello (IT)
(74) Representative: Emmi, Mario

(57) **Abstract**

The present invention concerns a safety system for trucks in general comprising cameras/sound/flashing alarms which are activated through sensors placed on points considered dangerous for the driver's safety, for safeguarding the motor vehicle, and above all for life and/or safety of third persons who might be involved in accidents.

## Description

### Field of the invention

The present invention relates to road safety systems.

In particular, the invention relates to an audio/video safety system which may be installed on road vehicles such as articulated motor vehicles of any kind, in such a way as to have a full view thus actually eliminating the risk of the so-called blind spot.

More in particular, the system in question allows the possibility of having a 360° view (daily/nocturnal) on all the perimeter of the motor vehicle, thus remarkably increasing safety, and avoiding stressful situations for the driver.

### Brief outline of the known art

In the field of road safety, the issue of the so-called blind spots has been known for a long time. An area with no view for the driver is called blind spot.

More in particular, the blind spot is the area inaccessible (hidden) to the visual field of a vehicle's driver. It is an area which is covered neither by the field of the rear-view mirrors, nor by the driver's view.

This issue of blind spots is a very felt problem given that it may often cause victims.

In fact, it is not uncommon for the driver not to notice the presence of other subjects while maneuvering, just because of a blind spot, thus causing even deadly accidents.

For example, in the event of a truck of any size, a very dangerous blind spot is, for example, represented by the part of the passenger side in the driver's cabin, given that who drives is distant and, despite of the rear-view mirror, has no optimal view.

A further blind spot is the one while maneuvering in reverse when the trailer or semitrailer of the articulated motor vehicle is placed rotated (that is at angle) with respect to the tractor's cabin.

As is well known, an articulated motor vehicle is constituted by a cabin tractor and a semitrailer or trailer.

In the case of semitrailer, it partially rests on the structure of the cabin with which it is, let's say, "articulated", that is hinged and free to rotate at least partially. The trailer does not rest partially on the cabin tractor but is it towed for example by means of a hook thereby fully resting on its structure.

What has been described in the present patent application is obviously valid both for the trailer and for the semitrailer indifferently.

The cabin tractor is the driver cabin with the engine which hooks on the rear the semitrailer (or trailer as mentioned) which represents the loading area for transport.

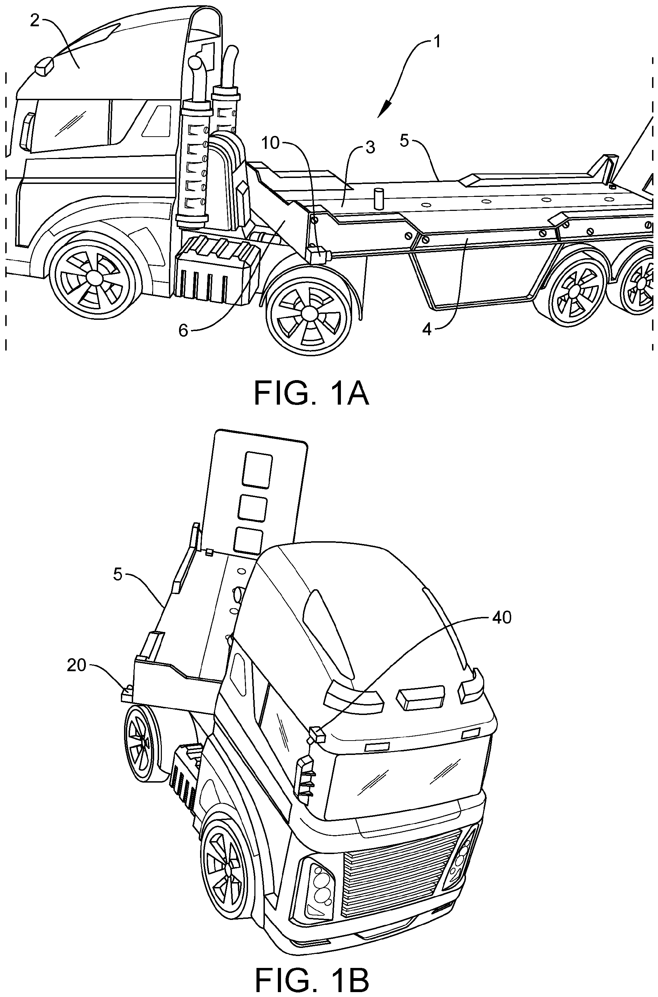

With reference to figure 1A, it shows a regular truck 1 which therefore comprises the cabin tractor 2 and the semitrailer 3 (if it was a trailer, it would have been hooked to the cabin tractor with the hook without partially resting on it).

As indicated in the example of figure 1A, an articulated motor vehicle which for example maneuvers in reverse, may easily wind up in the condition of figure 1A if during this maneuver it must make a turn and therefore with the part of this cabin tractor 2 which is at a certain angle with respect to the semitrailer (or trailer). This causes, from the cabin, in this specific condition, the driver to see from the rear-view mirror the structure of the semitrailer (or trailer) and to have no view with reference to the surrounding of the semitrailer (or trailer) and in particular s/he does not see the space parallel to the side line of the trailer (or semitrailer). This is clearly a condition of extreme danger because, actually, the driver operates almost blindly.

Further blind spots may be present.

In addition, the present publications US10259390, US 2018/204072, US 10748295, US 2022/414927 are known.

### Summary of the invention

Therefore, the aim of the present invention is to provide an innovative assistance system for a motor vehicle, in particular an articulated motor vehicle (also simply called articulated motor vehicle) with trailer/semitrailer, which allows resolving said technical disadvantages.

In particular, the aim of the present invention is to provide a system which allows monitoring, if necessary, one or more blind spots of the motor vehicle, in particular an articulated motor vehicle with trailer/semitrailer, in order to solve the issue of view and thus avoiding accidents.

These and other aims are achieved with the present articulated motor vehicle with trailer/semitrailer according to claim 1.

This articulated motor vehicle (1) comprises a cabin tractor (2) and a semitrailer or trailer (3) connected in an articulated way to the cabin tractor (2).

In addition, the articulated motor vehicle comprises a video system, indeed with the purpose of making up for the issue of blind spots of view.

According to the invention, now the video system comprises at least one first camera and at least one second camera arranged in such a position that each shoots a side line of the trailer/semitrailer (substantially, the side of the trailer/semitrailer).

In particular, a first camera shoots an area which runs along the whole or part of a side of the trailer/semitrailer and the second camera shoots an area which runs along the whole or part of the side opposite the previous one, that is the other side of the trailer/semitrailer.

In this way, the no view due to the presence of the same trailer/semitrailer which is placed in a rotated position (i.e., not aligned) with respect to the cabin is resolved.

Still according to the invention, said at least one first and second camera are communicating with a video screen (substantially, a monitor) installed inside the cabin tractor (2) and through which the driver can see the images acquired by said first and second camera.

In this way, the issues generated during maneuvering operations, for example in reverse, in which the trailer/semitrailer is placed obliquely with respect to the cabin thus obscuring the rear view, are resolved.

Advantageously, both said first and second camera are arranged in the front part of the trailer/semitrailer (3), that is the part connected to the cabin or anyway facing the cabin.

More particularly, advantageously, said first camera is applied to the front right angle or near the front right angle of the trailer/semitrailer on the part which faces the cabin tractor and the second camera is applied to the front left angle or near the front left angle of the trailer/semitrailer still on the part which faces the cabin tractor.

These positions are optimal for acquiring the image which runs along the sides of the trailer/semitrailer, on the front part towards the rear one.

Advantageously, as for example shown in figure 1A, the arrangement of the first and second camera to the structure of the trailer or semitrailer is such that said cameras are placed above the wheels (that is placed at a greater height from the ground with respect to the wheel). This has the great advantage of always allowing an excellent view also when the truck is maneuvering as, for example, shown in figure 1B, thereby with wheels which do not obstruct the view.

Advantageously, a further preferred solution provides an arrangement of the first and second cameras at least at two meters or more than two meters from the ground to prevent them from bumping into the trajectory of the wheels in the maneuvering step, thus maintaining an excellent view.

Advantageously, a third camera may be further comprised applied at the back of the trailer/semitrailer and connected to said video screen.

In this way, also what is present behind the trailer/semitrailer may be seen well.

Advantageously, in combination with the third camera or in replacement of the third camera (which may not be present) a camera (40) is comprised (indicated as fourth camera) arranged on the cabin in correspondence of the passenger side in such a way as to shoot broadly at least part of the side of said cabin on the passenger side and connected to said video screen.

Preferably said fourth camera placed on the cabin shoots broadly both at least the part of the side of the cabin and the front part of said driver cabin. For example, in figure 1B it is placed on top to the angle of the front part of the cabin.

According to a further preferred arrangement, said fourth camera might be arranged still in the position opposite the driver's side (therefore, the passenger side), like in the previous case and still in the front area of the cabin. However, in this case, the arrangement would be at the height of the lower side of the windshield in correspondence of the angle. This arrangement optimizes the front and/or side view.

In this way, the driver has a view of the cabin side from the part of the passenger, since this area is also particularly critical.

In fact, for example at traffic lights, it is not excluded that a person, for example on a motorbike or on a bike, comes up beside the means of transport and this condition is hardly visible to the driver.

According to this solution, at least said fourth camera is cooperating with a presence detection sensor.

In this way, said fourth camera is activated after a command received from the presence detection sensor when said presence detection sensor detects a subject/object in its range of action.

Preferably said range of action covers at least part of the area shot by said fourth camera.

In this way, if the sensor, for example, detects the presence of a person who pulls over the articulated motor vehicle, it activates the camera and therefore the driver sees on the display which a further image has been activated.

This activation of the camera is controlled by the presence detection sensor only when the speed of the articulated motor vehicle is within a pre-settable range.

In this way, for example, setting low ranges of speed, such as for example between 0 km/h and 20 km/h, ensures that the fourth camera is activated only if an obstacle or person has been detected on the cabin side when the motor vehicle is stationary (for example at a traffic light - speed 0 km/h) or is maneuvering or anyway it moves within these ranges of speed. In this way, continuous activation is prevented, for example when the articulated motor vehicle proceeds at a normal speed and a vehicle comes up beside it while overtaking it and therefore in regular speed conditions.

Advantageously, in the event of activation of said fourth camera, an alert for example a sound and/or light alert, is activated inside the cabin tractor and/or outside the cabin tractor.

In this way, the driver's attention is attracted and/or of any person or means of transport which comes up beside the cabin.

Advantageously, in the event activation of said fourth camera, the video screen only displays the full-screen image shot by said fourth camera excluding images of the other three cameras.

In this way, the driver's attention is further attracted in addition to any alerts mentioned above.

Advantageously, the driver with a suitable command may then reinstate vision of all cameras in the screen.

Advantageously, therefore, the video screen displays images shot by the camera/s.

Advantageously, the whole video system described here may comprise or anyway be cooperating with a mobile phone device with suitable software application which allows programming at least the range of speed which causes the activation of at least the fourth camera.

Substantially, the system may be controlled/programmed through App, for example setting the speed for activating the fourth camera and/or checking the shots and/or activating/deactivating one or more cameras.

In an advantageous embodiment of the invention, said presence detection sensor is cooperating with only the fourth camera together with the settable range of speed (i.e., programmable).

A variant does not exclude the possibility of integrating, in the same way, a presence detection sensor also for the other cameras which would operate in the same way, that is activation only in the case of detection of an obstacle and speed within a certain settable range.

However, this solution is less preferred, given that, obviously, having at least the first and the second camera (the ones shooting the two sides of the semitrailer/trailer) always active is safer.

The object of the present invention is also a method for reducing blind spots in an articulated motor vehicle, the method comprising the installation of a video system according to the following steps:

Applying at least one first camera and at least one second camera which are arranged in such a position as to shoot a side line of the trailer/semitrailer in such a way that the first camera shoots the line of a side of the trailer/semitrailer and the second camera shoots the other side line opposite to the previous one;

Installing a video screen inside the cabin tractor and wherein said at least one first and second cameras are communicating with said video screen in such a way that the driver can see, in use, the images acquired by said first and second camera.

Advantageously, both said first and second camera are arranged in the front part of the trailer/semitrailer (3).

In particular, advantageously, the first camera is applied on the front right angle or near the front right angle of the trailer/semitrailer on the side of the cabin tractor and the second camera is applied on the front left angle or near the front right angle of the trailer/semitrailer on the side of the cabin tractor.

Advantageously, the method may provide the installation of a third camera applied at the back of the trailer/semitrailer and connected to said video screen.

Advantageously, a fourth camera may be installed (with or without the aforesaid third camera) arranged on the cabin tractor in correspondence of the passenger side in such a way as to shoot broadly at least part of the side of said cabin tractor on the passenger side and connected to said video screen.

At least said fourth camera is cooperating with a presence detection sensor.

In this way, said fourth camera is activated after a command received from the presence detection sensor when said presence detection sensor detects a subject/object in its range of action.

This range of action of the sensor, advantageously, may cover at least part of the area shot by said fourth camera (preferably it substantially coincides with the shot area) .

Advantageously, the camera is activated when the signal by the presence detection sensor has been received and, contextually, when the speed of the articulated motor vehicle is within a pre-settable range.

### Brief description of the drawings

For better understanding the present invention, now a preferred embodiment is described only by way of non-exhaustive example, with reference to the attached drawings, wherein:
Figure 1A shows an articulated motor vehicle in the maneuvering step and highlights arrangement of the camera 10 at the front angle of the trailer or semitrailer for having the view of the side of said trailer/semitrailer; an equivalent camera is arranged at the opposite angle.
Figure 1B shows the same articulated motor vehicle shot from above and with the cabin rotated in the opposite way with respect to figure 1A, in such a way that it shows both the second camera 20, specular to the camera 10, and the further fourth camera 40 placed on top of the cabin on the passenger side;
Figure 1C shows the back with the third camera placed indeed on the bottom of the rear of the semitrailer;
Figure 2 shows an outline of a video screen 200 present or installable in the driver's cabin which is communicating with the various cameras introduced above; this video screen displays the images real-time on the screen; if the fourth camera is activated for highlighting a danger not visible to the driver, the image is amplified thus displaying on the screen only the image relative to the camera which shoots the danger; at the same time the sound/view system may be started in such a way that the driver must notice what is happening;
Figure 3 shows a mobile telephone device with the relative mobile App for controlling activation/deactivation of the system;

### Description of some preferred embodiments

The present invention, which will be described in detail now, concerns a safety system for trucks in general (in particular articulated motor vehicles) comprising cameras possibly assisted by sound and/or lighting alarms. At least one among said cameras, preferably all cameras, is/are activated through sensors placed on points considered dangerous for the driver's driving safety, for safeguarding the motor vehicle, and above all for life and/or safety of third persons who might be involved in accidents.

According to the invention, the system object of the invention provides for the use of cameras which may be fixed in one or more points of the vehicle thus covering the so-called blind spots.

Therefore, describing the invention in greater detail, more in particular, figure 1A outlines an articulated motor vehicle 1.

As is well known, an articulated motor vehicle comprises a front part 2, to form a driver's cabin and generally named cabin tractor or simply cabin 2 and a rear part 3.

This rear part 3, which represents the trailer or semitrailer (indicated for conciseness (trailer/semitrailer), that is the part intended for loading, is connected to the cabin 2.

The examples of the figure show a semitrailer 3, given that it is connected to a structural part of the cabin tractor and is partially supported by this cabin tractor.

The invention is applied identically to a trailer, therefore in the case of said part 3 hooked to the cabin tractor 2 for example through hook and with said part which does not rest partially on the cabin tractor.

As is well known, the conformation of the semitrailer (or trailer in general) 3 may be any in terms of sizes and shapes in general, thus for example being able to be fully closed such as through a sheet or constitute a closed area of metal. Obviously, many types of trailer/semitrailer exist which are not the object of the invention and any one of them may be provided.

The appended figures show an open semitrailer for transport of vehicles but it must be understood as a nonlimiting example, given that a semitrailer of another form (open or closed) or equally a trailer may be provided.

The semitrailer shown in figure 1A is of the ones suitable for transporting vehicles such as cars.

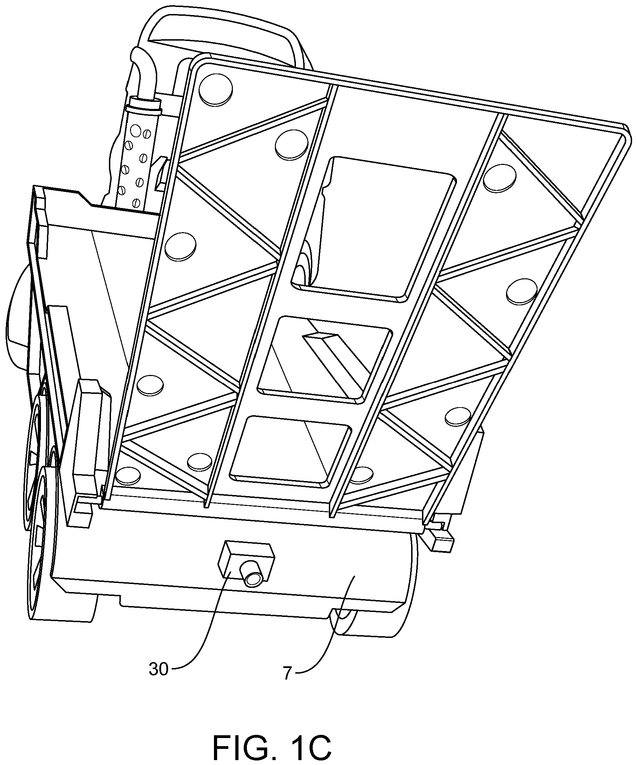

In all the aforesaid cases, the trailer/semitrailer may have a generally rectangular plan shape and therefore have two sides 4 and 5, a front side 6 (see figure 1A) and a rear side 7 as indicated in figure 1C.

These sides delimit the loading plane and the whole, as mentioned, may be indifferently uncovered or closed.

The figures related to the articulated motor vehicle, in a schematic way, indicate the wheels of the vehicle. The vehicle is obviously equipped with any rear-view mirrors present on the driver's side and on the passenger side in the front part of the cabin 2.

Therefore, going on describing the invention structurally, the system which is the object of the invention is now described.

Figure 1A and 1B show in a schematic view, the two cameras 10 and 20 arranged in the blind spots of the vehicle and indicated as first camera 10 and second camera 20.

In particular, these two cameras 10 and 20 are placed at the two front angles of the trailer/semitrailer 3 facing backward.

In this way, moving for example to figure 1A, the camera 10 shoots all the length of the side 4 of the trailer thereby shooting an area or zone which runs along this side 4. The second camera 20, arranged still in front at the angle opposite the previous one, shoots the area along the side 5 in the same way.

Still according to the invention, these two cameras may be assisted by a further camera 40 (indicated as fourth camera), which is located near the highest front angle of the cabin 2, right side in the case of left-hand drive or left side in the case of right-hand drive.

Substantially, it is positioned on the passenger side and therefore on the most distant part from the driver.

Moreover, a further camera placed behind the trailer/semitrailer (see figure 1C), indicated as camera 30, may optionally be provided, for example in a central position.

Still according to the system object of the invention, the images shot by the cameras are visible from the driver's cabin through a monitor 200 (or screen or whatever) which allows controlling at any time all what is happening perimetrically to the vehicle in question.

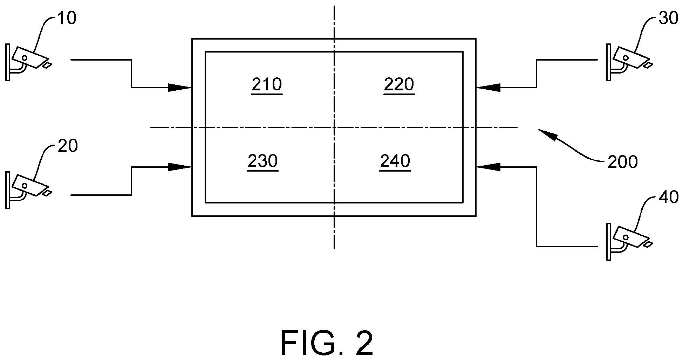

More in particular, the outline of figure 2 shows a video screen 200 which may be positioned in the driver's cabin.

The video screen (or monitor or whatever) 200 is placed into communication with the cameras (10, 20, 30, 40), as schematically indicated in the figure 2 in question. In fact, the screen has been subdivided into quarters (210, 220, 230, 240) to highlight how each quarter shows the images acquired by the relative camera. Therefore, if four cameras are provided like in the example of figure 2, it follows that the screen may be subdivided into four quarters (210, 220, 230, 240) of which each quarter is associated with a specific camera.

In this way, according to a first aspect of the invention, the images transmitted real-time by the cameras are always visible in the cabin or can anyway be seen, thus showing a situation perimetrical to the articulated motor vehicle.

More in particular, the two cameras (10, 20) placed on the front to the two front angles of the trailer/semitrailer 3 (i.e., the first 10 and the second camera 20 indicated in figure 1A and figure 1B) allows the driver to have a perfect vision of the sides (4, 5) of the trailer or semitrailer 3 in conditions where this vision would be impossible because it is obstructed by the angled position which the trailer/semitrailer assumes in predetermined maneuvers (for example, in reverse).

In particular, as shown in figure 1A or 1B, if the driver maneuvers in reverse by steering, then the trailer or semitrailer is placed in an angled position with respect to the cabin. With reference to figure 1A, the driver's view would be obstructed by the structure of the trailer/semitrailer itself, above all if it is with a closed loading area. The camera 10 solves this inconvenience and transmits to the cabin the real-time images relative to the side area of the side 4 of the trailer/semitrailer. In the same way, with reference to figure 1B, also if the driver uses the rear-view mirror on the passenger side, will not have any view of the side 5. The camera 20 solves this issue by sending to the monitor 200 the real-time image relative to the side 5.

In this way, the driver while maneuvering may check for any presence of persons/means/object near the sides of the trailer/semitrailer through the monitor mounted into the cabin.

The third rear camera facilitates vision of all what is happening behind the trailer/semitrailer.

Its presence is a preferred but not essential solution.

Then a fourth camera 40 is provided placed on top of the cabin more or less in the passenger side and aimed at shooting at least part of the cabin side of the passenger side.

In fact, this area is a blind area for the driver who obviously sits on the opposite side.

According to the invention, at least this camera 40 is cooperating with at least one presence detection sensor aimed at detecting persons and/or objects and/or means in general.

The sensor is arranged in such a way that its range of action coincides more or less with the one of the camera such that it guarantees detection of the obstacles in general obviously at least near this side of the cabin on the passenger side.

Therefore, the camera 40 is in a "*normally off*" condition but it receives automatically an activation command from said detection sensor when the latter detects a possible obstacle and only if the speed is within a certain pre-settable range.

Therefore, if the vehicle travels within said range of speed and the sensor detects a presence in its range of action, then this shooting camera is activated.

This is necessary given that this blind spot (the side of the cabin on the passenger side and/or the front part of the cabin on the passenger side) is a blind spot for the driver. Therefore, if the driver stops at a traffic light, s/he hardly notices that maybe a cyclist is stopping next to the cabin side. If the truck driver starts maneuvering, it could be dangerous and therefore activating the camera draws the driver's attention who sees an additional image on the monitor.

In this case, if required, sound alarms may be added, and the screen may be set automatically to show the only image of this camera, thereby drawing the driver's attention immediately.

The settable range of speed is important to prevent the camera from actually activating while driving regularly, for example when the truck is overtaking. Therefore, the settable range allows controlling an activation of this fourth camera only in conditions which are normally conditions of maneuver and stop and restarting while maneuvering.

The range of speed might for example be from 0 km/h to 30 km/h extremes included.

0 km/h would imply stationary vehicle and in this case, if the sensor detects an active presence, the camera sends the images to the monitor. The monitor avoids (meaning that it excludes and therefore it does not display) the images of the other cameras and transmits only the image of this fourth camera thus drawing the driver's attention. In addition, sound and/or light alarms may be provided.

Although the preferred configuration of the invention provides for a presence detection sensor associated with the only camera 40, besides an activation of it if the movement of the means is within a settable ranged, it is stressed here that the same concept could also be applied to the other cameras.

That is, also each of the first, the second and the third camera could be cooperating with a presence detection sensor and further controlled when activated also as a function of the range of speed, namely:

Range of speed within the preset value and sensor which detects a presence, then activation of the camera follows.

However, according to the invention, it is important that the cameras which shoot the sides (4, 5) of the trailer are always active such that, as mentioned, the preferred configuration provides anyway the first and the second camera always active, any third camera always active and any fourth camera controlled by the sensor and by the range of speed.

According to a further feature of the invention, the possibility of controlling the cameras is provided in order to activate and deactivate them in predetermined conditions.

More in particular, a software application for mobile device (for example a mobile phone device) is provided through which the parameters of speed may be adjusted and one or more cameras may be activated/deactivated.

Communication and control of cameras through mobile devices equipped with a suitable software application (generally called App) are known per se.

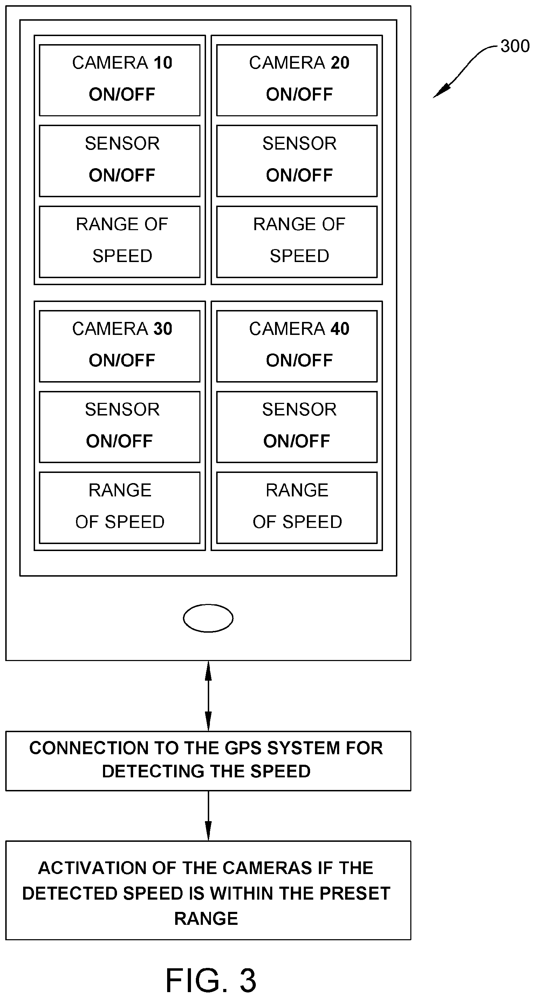

Therefore, figure 3 shows a possible exemplifying outline of a graphical interface relative to the software application in question.

In particular, a mobile telephone device 300 is shown, for example of the type IOS or Android such as iPhone, smartphone and the like widely used and sold by now.

Software applications generally named "App" may be downloaded on these mobile telephone devices.

It follows that a suitable mobile "App" may be provided as is outlined in figure 3 which, among its possible operations, may control activation/deactivation of the system (cameras/audio/flashing lights).

In particular, one or more of the cameras may be selected from the touch-screen display and still as shown in figure 3, their activation/deactivation may be set and, in the event of activation, their mode of functioning.

For example, in the preferred embodiment of the invention, as mentioned, the first camera 1 and the second camera 2 (the ones relative to monitoring of the sides of the trailer/semitrailer) may be set ON (therefore active) but deactivating the respective presence detection sensors (therefore set OFF) and deactivating the preset range of speed (thereby without inserting any range).

The third camera 30 (the one controlling the back of the trailer/semitrailer) may be maintained in the same way in the ON condition without ties of sensors and range of speed.

On the contrary, the fourth camera 40 is placed ON by activating the range of speed and inserting a preferred range of speed, besides activating the sensor.

Anyway, as shown in the example of figure 3, different combinations of activations/deactivations and therefore modalities of functioning with or without sensor and range of speed are not excluded.

Therefore, in particular, the cameras which must always remain active may be selected and a range of speed may be set for the camera which instead is activated as a function of the preset range of speed and as a function of detection of a presence through the sensor.

In addition, one or more cameras may be fully deactivated.

The application detects the speed of the vehicle, for example through GPS system.

Therefore, in the event of the fourth camera 40 activated together with its presence detection sensor and preset and active range of speed, while the other cameras are always active without any further tie, in this case, the monitor shows the images of the cameras 10, 20 ad 30 while the camera 40 is off if there is no detection of presence and the speed is out of the selected range.

However, if the speed falls within the selected range (for example because the vehicle stops for maneuvering) and the sensor detects a presence, then the image of this fourth camera prevails with the monitor only transmitting this image, excluding the other ones, and possibly sound and/or light alarms start. In this way, the driver's attention is drawn to the view towards the monitor, and only in this case, the driver may take any necessary precautions, without any other unnecessary distractions.

The same principle may apply if this modality of functioning were set at the same time for one or more of the other remaining cameras.

Therefore, according to the present invention, the controlled activation of the front camera placed on the passenger side is of particular importance, this system allows the full view of the space prevented to the driver and which is considered a blind spot, known as very dangerous.

Not last, the first and the second camera (10, 20) are placed on the front side of the trailer/semitrailer with a view on the whole appendix towards the back for having the greatest view in the case of maneuver, for example in reverse and anyway always visible on the screen for a fully safe drive.

In addition, they are helped by a camera placed centrally on the rear part of the articulated motor vehicle, thus completing the system.

It is visible on the monitor in the cabin as well.

To recap, upon starting the vehicle at least four images will be displayed on the monitor respectively in the case of at least four cameras, for indicating the good functioning of the cameras, then depending on the programming set, one or more of them may be deactivated.

If all cameras, from the software application, are activated together with their respective sensors and range of speed, it follows that they could remain off if the preset conditions do not occur, thereby with a monitor which does not display any image. However, at the moment when the speed is below the preset value (ex.: 0/20 km/h) and the presence sensor should detect persons/obstacles, then the relative camera is activated, together with the relative sound/light alarm.

However, preferably, at least the two cameras (10, 20) placed to shoot the two sides of the trailer are always active without any sensor and range of speed to control their activation.

The same occurs for the rear camera 30.

It follows that the screen displays at least the images of three cameras.

The fourth camera is activated in the event of detection of presence and reaching a condition of range of speed preset/pre-settable by the mobile App.

The present invention is applied to any type of motor vehicle, in particular to an articulated motor vehicle therefore equipped with trailer or semitrailer indifferently.

Therefore, the object of the present invention, in an advantageous form, is a motor vehicle comprising a cabin tractor (20) and wherein the motor vehicle comprises a video system.

Said video system comprises at least one first camera (10) and at least one second camera (20) arranged in such a position as to shoot a side line (4, 5) of said motor vehicle in such a way that a first camera (10) shoots an area which runs along the whole or part of a side (4) of the motor vehicle and the second camera (20) shoots an area which runs along the whole or part of the other side (5).

Still according to the invention, said at least one first and second camera are communicating with a video screen (200) installed inside the cabin tractor (2) and through which the driver can see the images acquired by said first and second camera.

All what has already previously mentioned is valid for this configuration, namely the further camera may be present on the cabin together with the sensor and operating as a function of the speed of the motor vehicle and/or the rear camera.

## Claims

1. An articulated motor vehicle (1), comprising a cabin tractor (2) and a trailer or semitrailer (3) connected to the cabin tractor (2) and wherein the motor vehicle comprises a video system, the video system comprising at least one first camera (10) and at least one second camera (20) arranged in such a position as to shoot a side line (4, 5) of the trailer/semitrailer in such a way that a first camera (10) shoots an area which runs along the whole or part of a side (4) of the trailer/semitrailer and the second camera (20) shoots an area which runs along the whole or part of the other side (5), and wherein said at least one first and second camera are communicating with a video screen (200) installed inside the cabin tractor (2) and through which the driver can see the images acquired by said first and second camera, preferably said first and second camera being arranged above the wheels of the trailer/semitrailer.

2. The motor vehicle, according to claim 1, wherein both said first (10) and second camera (20) are arranged in the front part of the trailer/semitrailer (3), preferably at a height of at least two meters or more from the level of the ground.

3. The motor vehicle, according to claim 1 or 2, wherein the first camera (10) is applied to the front right angle or near the front right angle of the trailer/semitrailer on the part of the cabin tractor and the second camera (20) is applied to the front left angle or near the front left angle of the trailer/semitrailer on the part of the cabin tractor.

4. The motor vehicle, according to one or more of the previous claims from 1 to 3, wherein a third camera (30) is further comprised applied at the back of the trailer/semitrailer and connected to said video screen (200).

5. The motor vehicle, according to one or more of the previous claims, wherein a fourth camera (40) is further comprised arranged on the cabin tractor (2) in correspondence of the passenger side in such a way as to shoot at least part of the side of said cabin tractor (2) and/or a front part on the passenger side and connected to said video screen (200).

6. The motor vehicle, according to claim 5, wherein at least said fourth camera (40) is cooperating with a presence detection sensor, said fourth camera being activated after a command received from the presence detection sensor when said presence detection sensor detects a subject/object in its range of action which covers at least part of the area shot by said fourth camera and when the speed of the articulated motor vehicle is within a pre-settable range.

7. The motor vehicle, according to claim 6, wherein in the event of activation of said fourth camera, an alert, for example a sound and/or light alert, is activated inside the cabin tractor and/or outside the cabin tractor.

8. The motor vehicle, according to claim 6 or 7, wherein in the event of activation of said fourth camera (40), the video screen (200) only displays the full-screen image shot by said fourth camera excluding images of the other cameras.

9. The motor vehicle, according to one or more of the previous claims, wherein the video screen (200) displays images shot by cameras.

10. The motor vehicle, according to one or more of the previous claims, wherein a mobile phone device with suitable software application is comprised which allows programming at least the range of speed which causes activation of at least the fourth camera and/or the activation of the remaining cameras.

11. A method for reducing blind spots in an articulated motor vehicle, the method comprising the installation of a video system according to the following steps:
Applying at least one first camera (10) and at least one second camera (20) which are arranged in such a position as to shoot a side line (4, 5) of the trailer/semitrailer in such a way that the first camera (10) shoots the line of a side (4) of said trailer/semitrailer and the second camera (20) shoots the other side line (5) opposite to the previous one;
Installing a video screen (200) inside the cabin tractor (2) and wherein said at least one first and second cameras are communicating with said video screen in such a way that the driver can see, in use, the images acquired by said first and second camera.

12. The method, according to claim 11, wherein both said first and second camera are arranged in the front part of the trailer/semitrailer (3), in which the first camera is applied on the front right angle or near the front right angle of the trailer/semitrailer on the side of the cabin tractor and the second camera is applied on the front left angle or near the front right angle of the trailer/semitrailer on the side of the cabin tractor.

13. The method, according to claim 12, wherein the method provides the installation of a third camera (30) applied at the back of the trailer/semitrailer and connected to said video screen and wherein the installation of a fourth camera (40) is further comprised arranged on the cabin tractor in correspondence of the passenger side in such a way as to shoot at least part of the side of said cabin tractor and/or its front part on the passenger side and connected to said video screen and wherein at least said fourth camera is cooperating with a presence detection sensor, said fourth camera being activated after a command received from the presence detection sensor when said presence detection sensor detects a subject/object in its range of action which covers at least part of the area shot by said fourth camera and when the speed of the articulated motor vehicle is within a pre-settable range.

14. The method, according to claim 13, wherein, in the event of activation of said fourth camera, an alert is activated, for example a sound and/or light alert, inside the cabin tractor and/or outside of the cabin tractor.

15. The method, according to claim 13 or 14, wherein, in the event of activation of said fourth camera (40), the video screen (200) only displays the full-screen image shot by said fourth camera excluding images of the other cameras.
